(19) Europäisches Patentamt
European Patent Office
Office européen des brevets

(11) **EP 4 782 471 A1**

(12) **EUROPEAN PATENT APPLICATION**

(43) Date of publication:
29.07.2026 Bulletin 2026/31

(51) International Patent Classification (IPC):
*C08F 216/06* (2006.01)      *C08F 8/12* (2006.01)
*C08F 218/08* (2006.01)      *C08J 5/18* (2006.01)

(21) Application number: 26153579.3

(22) Date of filing: 22.01.2026

(52) Cooperative Patent Classification (CPC):
(C-Sets available)
**C08F 218/08; C08F 8/12; C08F 216/06; C08J 5/18**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.01.2025  US 202563748685 P
29.05.2025  US 202563813648 P
20.08.2025  US 202563867033 P
20.11.2025  TW 114145277
20.11.2025  CN 202511706246

(71) Applicant: Chang Chun Petrochemical Co., Ltd.
Taipei City 104 (TW)

(72) Inventor: SUN, Jyun-Ru
Zhongshan Dist., Taipei City 104 (TW)

(74) Representative: 2K Patent Partnerschaft mbB
Hamburger Allee 26-28
60486 Frankfurt am Main (DE)

(54) **MODIFIED VINYL ALCOHOL COPOLYMER, RESIN FILM AND WATER-SOLUBLE PACKAGING**

(57)    A modified polyvinyl alcohol copolymer has a degree of saponification of 70 mole% or more according to JIS K 6726 (1994) standard, comprising monomer units containing carboxyl groups and monomer units containing lactam functional groups; wherein when a $^1$H-NMR spectrum of the copolymer is measured at 400 MHz and 25°C using DMSO-d6 as solvent, an integrated area of the spectrum from 3.65 to 4.00 ppm is defined as 1 and the integrated area from 2.05 to 2.35 ppm in the spectrum is 0.002 to 0.200; wherein when the copolymer is subjected to thermal analysis using a differential scanning calorimeter, in the curve with temperature as X-axis and heat flow as Y-axis, the slope between 100°C and melting point Tm(°C) is between - 0.00100 and -0.00190 W/g°C. The copolymer is applicable for preparing polyvinyl alcohol water-soluble films. The present disclosure also relates to a resin film and water-soluble package.

**(Cont. next page)**

EP 4 782 471 A1

(52) Cooperative Patent Classification (CPC): (Cont.)

C-Sets
**C08F 8/12, C08F 218/08;**
**C08F 216/06, C08F 220/04;**
**C08F 216/06, C08F 226/10;**
**C08F 216/06, C08F 226/10, C08F 220/04;**
**C08F 216/06, C08F 226/10, C08F 222/16;**
**C08F 218/08, C08F 220/04;**
**C08F 218/08, C08F 226/10;**
**C08F 218/08, C08F 226/10, C08F 220/04;**
**C08F 218/08, C08F 226/10, C08F 220/585;**
**C08F 218/08, C08F 226/10, C08F 222/16**

**Description**

BACKGROUND OF THE INVENTION

1. Field of the Invention

The present disclosure relates to a modified vinyl alcohol copolymer, which can be used for the preparation of modified vinyl alcohol copolymer water-soluble films; however, the present disclosure is not limited thereto. The present disclosure also relates to a resin film and a water-soluble package.

2. Description of the Related Art

Polyvinyl alcohol is a water-soluble polymer, and due to its excellent film mechanical properties and chemical resistance, it is widely used in water-soluble packaging films. Water-soluble packaging films made from polyvinyl alcohol can be used to package chemicals, thereby avoiding the risk of users having direct contact with chemicals.

Taiwan Patent Publication No. 201934644 discloses a film or packaging form for pharmaceutical packaging, which contains polyvinyl alcohol resin, a plasticizer, and water-soluble starch. The water-soluble starch is selected from the group consisting of hydroxyethylated starch and hydroxypropylated starch, and has the solubility of dissolving in water at a concentration of 10 mass% and a temperature of 50°C when stirred for 30 minutes. The content of the water-soluble starch is 4 mass% or less. The polyvinyl alcohol resin is composed of unmodified polyvinyl alcohol or comprises at least one selected from the group consisting of sulfonic acid group-modified polyvinyl alcohol and pyrrolidone ring-modified polyvinyl alcohol. Accordingly, the film or packaging form for pharmaceutical packaging of this invention can maintain the tensile strength and chemical resistance of the film over a long period and maintain good water solubility.

The Chinese invention patent publication CN107922646A relates to a water-soluble film for packaging liquid detergents containing polyol (Y). This water-soluble film for packaging contains polyvinyl alcohol-based resin (A) and polyol (X), where the content ratio of polyol (X) relative to polyvinyl alcohol-based resin (A) is set to x weight%, and the content ratio of polyol (Y) in the liquid detergent is set to y weight%, satisfying the formula: x>y. The packaging of this invention does not compromise the tensile strength of the water-soluble film over time, even when it is used for packaging liquid detergents.

BRIEF SUMMARY OF THE INVENTION

The inventors of this disclosure have discovered that traditional water-soluble packaging films cannot simultaneously possess the characteristics of low film adhesion, low-temperature solubility, high mechanical strength, and alkali resistance. Therefore, there is still room for improvement in traditional polyvinyl alcohol. The technical field of the present disclosure urgently requires a novel vinyl alcohol polymer to meet the industry's demand for water-soluble packaging films that simultaneously possess low film adhesion, low-temperature solubility, high mechanical strength, and alkali resistance. Therefore, an objective of the present disclosure is to provide a novel modified vinyl alcohol copolymer with excellent physical and chemical properties, enabling the resulting water-soluble packaging film to simultaneously possess the characteristics of low film adhesion, low-temperature solubility, high mechanical strength, and alkali resistance.

Specifically, one aspect of the present disclosure provides a modified vinyl alcohol copolymer, having a degree of saponification of 70 mole% or more according to the JIS K 6726(1994) standard; wherein the modified vinyl alcohol copolymer comprises monomer units containing carboxyl groups and monomer units containing lactam functional groups; wherein the $^1$H-NMR spectrum of the modified vinyl alcohol copolymer is measured at 400 MHz and 25°C using DMSO-d6 as a solvent, an integrated area of the spectrum from 3.65 to 4.00 ppm is defined as 1, and an integrated area of the spectrum corresponding to 2.05 to 2.35 ppm is in a range of 0.002 to 0.200; wherein the modified vinyl alcohol copolymer is subjected to thermal analysis using a differential scanning calorimeter, and in a curve obtained by plotting temperature as an X-axis and heat flow as a Y-axis, a slope between 100°C and a melting point Tm(°C) is in a range of -0.00100 and -0.00190 W/g°C.

In a preferred embodiment, the degree of saponification is 70 to 99 mole%.

In a preferred embodiment, the degree of saponification is 80 mole% or more.

In a preferred embodiment, the degree of saponification is 80 to 95 mole%.

In a preferred embodiment, among all monomer units of the modified vinyl alcohol copolymer, the monomer units containing carboxyl groups account for 0.1 mole% to 4.0 mole%.

In a preferred embodiment, among all monomer units of the modified vinyl alcohol copolymer, the monomer units containing carboxyl groups account for 0.1 mole% to 3.0 mole%.

In a preferred example, the integrated area of the spectrum at 2.05 to 2.35 ppm is 0.003 to 0.100.

In a preferred embodiment, the slope between 100°C and the melting point Tm(°C) is between -0.00120 and -0.00190 W/g°C.

In a preferred embodiment, the modified vinyl alcohol copolymer has a viscosity of 10 to 35 cps according to the JIS K 6726(1994) standard.

In a preferred embodiment, the modified vinyl alcohol copolymer has an average degree of polymerization of 1400 to 2000 according to the JIS K 6726(1994) standard.

In a preferred embodiment, the lactam functional group is selected from at least one of caprolactam, butyrolactam, pyrrolidone, methylpyrrolidone, piperidone, or morpholinone.

In a preferred embodiment, the lactam functional group is derived from at least one of N-vinyl-2-caprolactam, N-vinylbutyrolactam, N-vinylpyrrolidone, N-vinyl-5-methyl-2-pyrrolidone, N-vinyl-2-piperidone, or N-vinyl-3-morpholinone.

In a preferred embodiment, the lactam functional group is derived from at least one of N-vinylbutyrolactam, N-vinylpyrrolidone, or N-vinyl-5-methyl-2-pyrrolidone.

In a preferred embodiment, the carboxyl group is derived from at least one of maleic acid, monomethyl maleate, monoethyl maleate, maleic anhydride, itaconic acid, monomethyl itaconate, monoethyl itaconate, crotonic acid, or acrylic acid.

Another aspect of the present disclosure provides a resin film, comprising the modified vinyl alcohol copolymer as described above.

Another aspect of the present disclosure provides a water-soluble package, comprising the resin film as described above.

Compared to the prior art, the modified vinyl alcohol copolymer of the present disclosure has excellent physical and chemical properties, enabling the resulting resin film, water-soluble packaging film, or water-soluble package to simultaneously possess characteristics such as low film adhesion, low-temperature solubility, high mechanical strength, and alkali resistance. As a result, the resin film or packaging film is less likely to be affected by the alkalinity of the contents, while also reducing the risk of rupture of the formed water-soluble package during transportation, storage, or use; furthermore, its low-temperature solubility allows the water-soluble package to release its contents at lower water temperatures, aligning with carbon reduction and net-zero emission goals; additionally, its low film adhesion prevents the resin film or packaging film from sticking to each other, making it less prone to damage due to film adhesion during production or storage.

## BRIEF DESCRIPTION OF THE DRAWINGS

Not applicable.

## DETAILED DESCRIPTION OF THE INVENTION

In order to make the description of the present disclosure more detailed and complete, illustrative descriptions are provided below regarding the embodiments and specific examples of the present disclosure, but these are not the only forms of implementing or applying the specific examples of the present disclosure. In this specification and the appended claims, unless otherwise stated in the context, "a" and "the" can also be interpreted as plural.

Although the numerical ranges and parameters used to define the present disclosure are approximations, the relevant values in the specific examples are presented as precisely as possible. However, any value inherently contains standard deviations due to individual test methods. Therefore, unless otherwise stated, the numerical parameters disclosed in this specification and the accompanying claims are approximate values and may be adjusted as needed. These numerical parameters should at least be understood as the values obtained by applying general rounding to the indicated significant figures.

## Modified Vinyl Alcohol Copolymer

The present disclosure provides a modified vinyl alcohol copolymer, having a degree of saponification of 70 mole% or more according to the JIS K 6726(1994) standard; wherein the modified vinyl alcohol copolymer comprises monomer units containing carboxyl groups and monomer units containing lactam functional groups; wherein the $^1$H-NMR spectrum of the modified vinyl alcohol copolymer is measured at 400 MHz and 25°C using DMSO-d6 as a solvent, an integrated area of the spectrum from 3.65 to 4.00 ppm is defined as 1, and an integrated area of the spectrum corresponding to 2.05 to 2.35 ppm is in a range of 0.002 to 0.200; wherein the modified vinyl alcohol copolymer is subjected to thermal analysis using a differential scanning calorimeter, and in a curve obtained by plotting temperature as an X-axis and heat flow as a Y-axis, a slope between 100°C and a melting point Tm(°C) is in a range of -0.00100 and -0.00190 W/g°C.

[Degree of saponification]

In the present disclosure, the degree of saponification of the modified vinyl alcohol copolymer is measured according to the JIS K 6726(1994) standard and is 70 mole% or more, for example: 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 mole%, preferably 80 mole% or more, more preferably 86 mole% or more. Without being bound by any particular theory, the inventors of this disclosure have found that when the modified vinyl alcohol copolymer has a degree of saponification of 70 mole% or more, it exhibits better mechanical strength. In contrast, if the degree of saponification of the modified vinyl alcohol copolymer is less than 70 mole%, its mechanical strength is poor.

[Modification and degree of modification]

The modified vinyl alcohol copolymer referred to in the present disclosure means introducing "specific groups" into the vinyl alcohol copolymer to impart improved properties to the modified vinyl alcohol copolymer; the degree of modification of the modified vinyl alcohol copolymer in the present disclosure refers to the molar ratio of monomer units containing specific groups among all monomer units in the modified vinyl alcohol copolymer. The "specific groups" referred to in this context are preferably, but not limited to, lactam functional groups and carboxyl groups.

[Lactam functional group modification]

In the present disclosure, the "lactam functional group" is selected from at least one of, for example but not limited to, caprolactam, butyrolactam, pyrrolidone, methylpyrrolidone, piperidone, or morpholinone; and the lactam functional group in the modified vinyl alcohol copolymer is derived from at least one of, for example but not limited to, N-vinyl-2-caprolactam, N-vinylbutyrolactam, N-vinylpyrrolidone, N-vinyl-5-methyl-2-pyrrolidone, N-vinyl-2-piperidone, or N-vinyl-3-morpholinone. In a preferred embodiment, the lactam functional group in the modified vinyl alcohol copolymer is derived from at least one of, for example but not limited to, N-vinyl-2-piperidone or N-vinyl-3-morpholinone.

Methods for introducing lactam functional groups into vinyl alcohol copolymers include, but are not limited to, graft polymerization and copolymerization, with copolymerization being preferred.

The degree of modification of the lactam functional group in the modified vinyl alcohol copolymer can be measured using methods including, but not limited to, the following: Elemental Analysis (EA) method (for example, using an Elementar UNICUBE to perform nitrogen content analysis, and calculating the degree of modification of the lactam functional group from the nitrogen content), Fourier Transform Infrared Spectroscopy (FTIR) analysis method, or Nuclear Magnetic Resonance Spectroscopy ($^1$H-NMR or $^{13}$C-NMR) analysis method, with $^1$H-NMR being preferred for analysis.

In the present disclosure, the lactam functional group of the modified vinyl alcohol copolymer is expressed in terms of its degree of modification based on the integrated area of the spectrum results measured by $^1$H-NMR; the term "integrated area of the lactam functional group" in this context refers to the $^1$H-NMR spectrum of the modified vinyl alcohol copolymer measured at 400 MHz and 25°C using DMSO-d6 as a solvent. The signal observed from 3.65 to 4.00 ppm originates from the methine connected to the hydroxyl group in the polyvinyl alcohol monomer; the signal observed from 2.05 to 2.35 ppm is the lactam functional group. The integrated area of the signal from 3.65 to 4.00 ppm is defined as 1, and the integrated area corresponding to the signal from 2.05 to 2.35 ppm is obtained as the degree of modification of the lactam functional group corresponding to the polyvinyl alcohol.

The modified vinyl alcohol copolymer of the present disclosure, having lactam functional group modification, has an integrated area of the lactam functional group ranging from 0.002 to 0.200, providing suitable water solubility. If the integrated area of the lactam functional group is less than 0.002, the degree of modification by the lactam functional group is too low to disrupt the crystallinity of the modified vinyl alcohol copolymer, resulting in poor water solubility.

In another aspect of the present disclosure, the degree of modification of the lactam functional group in the modified vinyl alcohol copolymer can be analyzed by the aforementioned $^1$H-NMR, and then its molar number can be calculated. Elemental analysis can also be used to analyze the nitrogen content, and the molar number can be calculated from the nitrogen content. The quantification of its molar number can be performed using conventional methods, with $^1$H-NMR detection and conversion to molar number being preferable. The degree of lactam modification is expressed in terms of molar ratio, that is, the molar ratio of monomer units containing lactam functional groups among all monomer units of the modified vinyl alcohol copolymer, preferably from 0.1 mole% to 8.0 mole%, for example: 0.1, 0.5, 1.0, 1.5, 2.0, 2.5, 3.0, 3.5, 4.0, 4.5, 5.0, 5.5, 6.0, 6.5, 7.0, 7.5, or 8.0 mole%, more preferably from 0.1 mole% to 6.0 mole%, and even more preferably from 0.1 mole% to 4.0 mole%, for example: 0.18, 0.96, 1.60, 1.67, 2.56, 3.38, 3.49, 3.52, or 3.59 mole%. Conversely, if the molar ratio of monomer units containing lactam functional groups among all monomer units of the modified vinyl alcohol copolymer is less than 0.1 mole%, the crystallinity of the modified vinyl alcohol copolymer cannot be disrupted by the lactam functional group, resulting in poor water solubility.

[Carboxyl group modification]

In the present disclosure, the vinyl alcohol copolymer modified with "carboxyl group" refers to the introduction of carboxyl groups (-COOH) into the vinyl alcohol copolymer. The preferred method for introducing the carboxyl group includes but is not limited to copolymerization, grafting, chemical modification/esterification, or amidation reactions (post-modification), with copolymerization being the more preferred method.

The degree of modification of the carboxyl group represents the molar proportion of monomer units containing carboxyl groups among all monomer units in the modified vinyl alcohol copolymer, expressed in mole percent (mole%) in this context.

The method for measuring the degree of modification of the aforementioned carboxyl group can include, but is not limited to, the following examples: the ash content measurement method of JIS K 6726(1994), acid-base titration, FTIR analysis, etc. Preferably, the standard method of JIS K 6726(1994) is adopted.

In the present disclosure, among all monomer units of the modified vinyl alcohol copolymer, the molar proportion of monomer units containing carboxyl groups is preferably from 0.1 mole% to 4.0 mole%, for example: 0.1, 0.5, 1.0, 1.5, 2.0, 2.5, 3.0, 3.5, or 4.0 mole%, more preferably from 0.1 mole% to 3.0 mole%, for example: 0.25, 0.96, 1.73, 1.77, 1.88, 1.90, 1.94, 2.06, 2.15, 2.28, or 2.34 mole%.

[Total degree of modification of modified monomer]

In the present disclosure, among all monomer units of the modified vinyl alcohol copolymer, the total of the monomer units containing carboxyl groups and the monomer units containing lactam functional groups is preferably 1.5 mole% to 10.0 mole%, for example: 1.5, 2.0, 2.5, 3.0, 3.5, 4.0, 4.5, 5.0, 5.5, 6.0, 6.5, 7.0, 7.5, 8.0, 8.5, 9.0, 9.5, 10.0 mole%; more preferably 1.5 mole% to 6.0 mole%, for example: 1.91, 1.92, 3.37, 4.44, 5.28, 5.43, 5.53, 5.65, 5.80, or 5.83 mole%.

[Melting slope]

The modified vinyl alcohol copolymer of the present disclosure has a melting slope within a specific range. Specifically, the melting slope refers to the slope obtained from a curve obtained by plotting temperature as an X-axis and heat flow as a Y-axis, during the thermal analysis of the modified vinyl alcohol copolymer using a differential scanning calorimeter, in a range between 100°C and a melting point Tm(°C).

Without being limited to a specific theory, if the modified vinyl alcohol copolymer can reach equilibrium with a given temperature more quickly, it indicates that it absorbs less heat and melts more easily. Therefore, when the melting slope is gentler, it means the polymer melts more easily. Since the melting slope is a negative value, a gentler slope indicates a higher numerical value, closer to 0.

The melting slope can be controlled by whether the modified vinyl alcohol copolymer undergoes saponification washing or by adjusting the conditions of the saponification washing. Specifically, saponification washing of the modified vinyl alcohol copolymer can alter the arrangement of acetoxy groups (-OAc) and hydroxyl groups (-OH) in the modified vinyl alcohol copolymer, changing the structure of its block arrangement, thereby affecting the melting slope. If the solvent in the saponification washing contains more methyl acetate, the saponification system will tend towards heterogeneity, causing the acetoxy groups to tend to arrange together and the hydroxyl groups to tend to arrange together, which will increase the blockiness of the modified vinyl alcohol copolymer and change the melting slope.

The slope from 100°C to the melting point Tm (°C) is between -0.00100 and -0.00190 W/g°C, for example: -0.00100, -0.00105, -0.00110, -0.00115, -0.00120, - 0.00125, -0.00130, -0.00135, -0.00140, -0.00145, -0.00150, -0.00155, -0.00160, - 0.00165, -0.00170, -0.00175, -0.00180, -0.00185, -0.00190 W/g°C; preferably between -0.00120 and -0.00190 W/g°C, for example: -0.00120, -0.00125, -0.00130, -0.00135, -0.00140, -0.00145, -0.00150, -0.00155, -0.00160, -0.00165, -0.00170, - 0.00175, -0.00180, -0.00185, -0.00190 W/g°C. When the melting slope is greater than -0.00100 W/g°C, it easily causes film adhesion; when the melting slope is less than -0.00190 W/g°C, the low-temperature water solubility is poor.

[Viscosity]

The viscosity of the modified vinyl alcohol copolymer was measured according to the standard method of JIS K 6726(1994), and in this context, it is expressed in centipoise (cps).

In the present disclosure, the viscosity of the modified vinyl alcohol copolymer is preferably 10 to 35 cps, for example: 10, 15, 20, 25, 30, or 35 cps, and more preferably 12.5 to 31 cps, for example: 13.00, 20.60, 20.98, 22.60, 29.00, or 30.80 cps. Conversely, if the viscosity of the modified vinyl alcohol copolymer is less than 10 cps, it will result in insufficient mechanical strength, making it difficult to process into a resin film. Conversely, if the viscosity of the modified vinyl alcohol copolymer is greater than 35 cps, it will result in poor water solubility.

[Average degree of polymerization]

The average degree of polymerization described in this context refers to the average number of repeating units contained in the molecular chain of the modified vinyl alcohol copolymer. The average degree of polymerization of the modified vinyl alcohol copolymer is measured according to the standard method of JIS K 6726(1994) in this context.

In the present disclosure, the average degree of polymerization of the modified vinyl alcohol copolymer is preferably from 1400 to 2000, for example: 1400, 1500, 1600, 1700, 1800, 1900, or 2000.

[Preparation method of modified vinyl alcohol copolymer]

The modified vinyl alcohol copolymer of the present disclosure can be prepared by the following exemplary method, but the present disclosure is not limited thereto.

An exemplary preparation method of the modified vinyl alcohol copolymer of the present disclosure comprises: (a) adding a vinyl ester monomer, a monomer containing a carboxyl group, a monomer containing a lactam functional group, an initiator, and a solvent into a reactor equipped with a stirrer, and mixing them thoroughly; (b) conducting a polymerization reaction in the reactor to obtain a polymerized initial product; (c) adding methanol to the initial product and azeotropically heating to remove unreacted monomers, thereby obtaining a methanol solution containing the modified vinyl ester copolymer; (d) adding sodium hydroxide to the methanol solution for saponification to obtain a saponified initial product; (e) washing the saponified initial product with methanol, and after washing, removing the methanol to obtain the modified vinyl alcohol copolymer.

Among them, in step (a), the vinyl ester monomer includes but is not limited to: vinyl formate, vinyl acetate, vinyl trifluoroacetate, vinyl propionate, vinyl pentanoate, vinyl butyrate, vinyl isobutyrate, vinyl pivalate, vinyl decanoate, vinyl laurate, vinyl stearate, vinyl benzoate, or vinyl neodecanoate monomer, preferably vinyl acetate monomer; the monomer containing a carboxyl group includes but is not limited to: at least one of maleic acid, monomethyl maleate, monoethyl maleate, maleic anhydride, itaconic acid, monomethyl itaconate, monoethyl itaconate, crotonic acid, or acrylic acid; the monomer containing a lactam functional group includes but is not limited to: at least one of N-vinyl-2-caprolactam, N-vinylbutyrolactam, N-vinylpyrrolidone, N-vinyl-5-methyl-2-pyrrolidone, N-vinyl-2-piperidone, or N-vinyl-3-morpholinone; the initiator includes but is not limited to: at least one of azobisisobutyronitrile, azobisisoheptonitrile, azobisisobutyrate dimethyl, diisopropyl peroxydicarbonate, benzoyl peroxide, methyl ethyl ketone peroxide, 2-butanone peroxide, lauroyl peroxide, or tert-butyl peroxybenzoate; the solvent includes but is not limited to: methanol, ethanol, water, n-propanol, isopropanol, n-butanol, isobutanol, sec-butanol, tert-butanol, toluene, tetrahydrofuran (THF), dimethylformamide (DMF).

Among them, in step (b), the preferred polymerization reaction temperature is 60 to 70°C, for example: 60, 61, 62, 63, 64, 65, 66, 67, 68, 69, or 70°C; the preferred reaction retention time is 3 to 10 hours, for example: 3, 4, 5, 6, 7, 8, 9, or 10 hours; the preferred solid content of the polymerized initial product is controlled at 30 to 70% by weight, for example: 30, 35, 40, 45, 50, 55, 60, 65, or 70% by weight.

Among them, in step (c), the concentration of the methanol solution containing the modified vinyl ester copolymer is preferably 10 to 50% by weight, for example: 10, 15, 20, 25, 30, 35, 40, 45, or 50% by weight.

Among them, in step (d), sodium hydroxide is preferably added in the form of a sodium hydroxide methanol solution, with the concentration of the sodium hydroxide methanol solution preferably being 1.0 to 5.0% by weight, for example: 1.0, 1.5, 2.0, 2.5, 3.0, 3.5, 4.0, 4.5, or 5.0% by weight; the amount of sodium hydroxide relative to the modified vinyl ester copolymer is preferably 0.0170 to 0.0370 moles, for example: 0.0170, 0.0190, 0.0210, 0.0230, 0.0250, 0.0270, 0.0290, 0.0310, 0.0330, 0.0350, or 0.0370 moles; the saponification temperature is preferably 20 to 55°C, for example: 20, 25, 30, 35, 40, 45, or 55°C; the saponification time is preferably 1 to 4 hours, for example: 1, 1.5, 2, 2.5, 3, 3.5, or 4 hours. After saponification, the saponified initial product slurry can be obtained by filtering the saponification mixture, such as through a 200 mesh nylon filter bag.

Among them, in step (e), the collected slurry is then washed with methanol as saponification washing solvent in moderation under stirring. The number of washing times is preferably 1 to 5, such as 3. Each washing is preferably conducted at a temperature of 25°C to 45°C for 2 to 5 minutes, such as 35°C for 3 minutes. The amount of the solvent only needs to exceed the volume of the slurry, and is preferably in excess of the volume of the slurry by approximately 10% to 30%. For operational convenience, the amount of the solvent may be measured by volume or converted into weight for addition.

The preferred method for removing methanol is to first perform centrifugal liquid removal, followed by drying in a dryer; the preferred drying temperature is 90 to 120°C, for example: 90, 95, 100, 105, 110, 115, or 120°C; the preferred drying time is 0.5 to 3 hours, for example: 0.5, 1, 1.5, 2, 2.5, or 3 hours.

[Application of Modified Vinyl Alcohol Copolymer]

For example, the modified vinyl alcohol copolymer of the present disclosure can be used as a surfactant, coating agent, additive, adhesive, fiber paste, dispersant, thickener, coagulant, or modifier, etc., but the present disclosure is not limited thereto. In addition, the modified vinyl alcohol copolymer of the present disclosure can be further cured and shaped to form a resin film, resin sheet, resin container, or resin fiber, etc., but the present disclosure is not limited thereto.

**Resin film**

The resin film of the present disclosure comprises the modified vinyl alcohol copolymer as described above.

The resin film of the present disclosure can be prepared by the following exemplary method, but the present disclosure is not limited thereto.

An exemplary preparation method of the resin film of the present disclosure comprises: (a) taking the modified vinyl alcohol copolymer of the present disclosure and preparing it into an aqueous solution of the modified vinyl alcohol copolymer; (b) casting the aqueous solution of the modified vinyl alcohol copolymer onto a support member (e.g., polyester film) and, after drying, peeling it off from the support member to obtain an initial product film; (c) subjecting the obtained initial product film to heat treatment.

In step (a), the concentration of the aqueous solution of the modified vinyl alcohol copolymer is preferably 5 to 25% by weight, for example: 5, 10, 15, 20, or 25% by weight. Additionally, extra additives may be added as needed, including but not limited to plasticizers, fillers, colorants, fragrances, defoamers, release agents, ultraviolet absorbers, and other additives commonly used in vinyl alcohol copolymer films.

Among them, in step (b), the method of casting the aqueous solution of the modified vinyl alcohol copolymer onto a support member can include: casting method, roll coating method, lip coating method, spin coating method, etc.

Among them, in step (b), the thickness of the initial product film is preferably 30 to 150 $\mu$m, for example: 30, 35, 40, 45, 50, 55, 60, 65, 70, 75, 80, 85, 90, 95, 100, 105, 110, 115, 120, 125, 130, 135, 140, 145, or 150 $\mu$m.

Among them, in step (c), the temperature of the heat treatment is preferably 60 to 120°C, for example: 60, 65, 70, 75, 80, 85, 90, 95, 100, 105, 110, 115, or 120°C; the time for the heat treatment is preferably 10 to 120 minutes, for example: 10, 15, 20, 25, 30, 35, 40, 45, 50, 55, 60, 65, 70, 75, 80, 85, 90, 95, 100, 105, 110, 115, or 120 minutes.

For example, the resin film of the present disclosure can be used as a packaging film (e.g., for packaging chemicals, pharmaceuticals, food, or beverages), a protective film (e.g., on materials such as paper containers, metal foil, acrylic, glass, natural or synthetic leather), but the present disclosure is not limited thereto.

**Water-soluble package**

The water-soluble package of the present disclosure comprises the resin film as described above.

For example, the resin film of the present disclosure can be used to encapsulate a chemical, pharmaceutical, food, or beverage to form the water-soluble package of the present disclosure, but the present disclosure is not limited thereto. For instance, the water-soluble package can be made into forms such as packaging pouches or packaging balls, but the present disclosure is not limited thereto. The method of making the resin film into a water-soluble package is not particularly limited; for example, the resin film can be folded and adhered around to form a water-soluble package, or two pieces of resin film can be overlapped and adhered around to form a water-soluble package, or other methods can be used to make a water-soluble package. The method of adhering the resin film is not particularly limited; for example, but not limited to, adhesion can be performed by heat sealing, adhesives, etc.

Specifically, the water-soluble package of the present disclosure can be a laundry capsule (also known as a laundry ball), which encapsulates detergent with the resin film of the present disclosure. Due to the low-temperature solubility characteristic of the resin film, the laundry capsule can dissolve and release detergent at low temperatures without the need to intentionally increase the washing temperature, thereby achieving the goals of carbon reduction and net-zero emissions. Additionally, the high mechanical strength characteristic of the resin film makes the laundry capsule resistant to accidental rupture during transportation, storage, or use. Furthermore, the alkali resistance characteristic of the resin film prevents the laundry capsule from reducing its solubility due to the alkaline detergent it contains. Moreover, its low film adhesion prevents the laundry capsules from sticking to each other, reducing the risk of damage due to film adhesion during production or storage. Accordingly, the water-soluble package of the present disclosure addresses the issues of traditional laundry capsules, such as easy adhesion, difficulty in dissolving at low temperatures, resulting in capsules sticking together and being difficult to handle, or causing rupture when separating adhered capsules, poor detergent release, and/or residual resin film.

The "low-temperature solubility" or "water solubility" referred to in this context means that the modified vinyl alcohol copolymer of the present disclosure, when formed into a resin film, resin sheet, or water-soluble package, can be dissolved and ruptured directly in unheated room temperature water (e.g., 25°C) within a specific time without the need for heated water. It also exhibits excellent water solubility even at low temperatures (e.g., 10°C). In one embodiment of the present disclosure, water at 10°C is used as the test standard, with the time required for film rupture being less than 35 seconds (sec) and the time required for film dissolution being less than 40 seconds (sec) as the criteria for determining the level of water solubility. However, this is merely one aspect of the embodiment used for testing in the present disclosure and is not limited thereto.

The term "alkali resistance" as used in this context refers to the stability of water solubility of the modified vinyl alcohol copolymer, resin film, or water-soluble package of the present disclosure in an alkaline environment. Specifically, better alkali resistance indicates that the vinyl alcohol copolymer, resin film, or water-soluble package is less likely to reduce its water solubility in an alkaline environment. In other words, it can maintain good water solubility in an alkaline environment. In one embodiment of the present disclosure, a sodium hydroxide aqueous solution is used as the test standard for the alkaline environment. A specific gram amount of the modified vinyl alcohol copolymer, resin film, or water-soluble package is placed in the solution and stirred to test whether it can completely dissolve within a specific time (for example, but not limited to 1000 seconds). However, this is merely one aspect of the embodiment test of the present disclosure and is not limited thereto.

The term "mechanical strength" as used in this context refers to the strength or resistance to external forces of the modified vinyl alcohol copolymer, resin film, or water-soluble package of the present disclosure. Various testing methods such as tensile strength, elongation at break, tensile modulus, tear strength, and impact strength can be used as indicators. In one embodiment of the present disclosure, a tensile testing machine is used to test the tensile force of the modified vinyl alcohol copolymer, resin film, or water-soluble package of the present disclosure. The higher the tensile force, the stronger the mechanical strength, and the better it can withstand external forces. However, this is merely one aspect of the embodiment test of the present disclosure and is not limited thereto.

## [Examples and Comparative Examples]

To fully understand the objectives, features, and effects of the present disclosure, a detailed description of the present disclosure is provided through the following specific examples, as described below.

The English names and their abbreviations of the compounds used in the following examples and comparative examples are shown in Table 1.

Table 1

| Abbreviations | Names | Abbreviations | Names |
|---|---|---|---|
| VAM | vinyl acetate monomer | 3M | monomethyl maleate |
| AIBN | azobisisobutyronitrile | CrA | crotonic acid |
| MeOH | methanol | AMPS | 2-acrylamido-2-methyl-propane sulfonic acid |
| | | NVP | N-vinyl-2-pyrrolidone |

## Example: Modified Vinyl Alcohol Copolymer

In a 2-liter (L) reactor equipped with a stirrer, various compounds were added according to the polymerization formulation shown in Table 2. A polymerization reaction was conducted in the reactor, where the polymerization reaction temperature was 66°C, and the reactor residence time was 6 hours. After the polymerization reaction was completed, the discharge was made from the bottom of the reactor, controlling the solid content to maintain it at 55.0% by weight.

Table 2

| | Polymerization formulation | | | | | Initiator | Solvent |
|---|---|---|---|---|---|---|---|
| | VAM | Monomer unit containing lactam functional group | Monomer unit containing carboxyl group | | Monomer unit containing sulfonic acid group | Initiator | Solvent |
| | | NVP | 33.04 wt% 3M | 43.84 wt% CrA | 15.00 wt% AMPS | AIBN | MeOH |
| | gram | gram | gram | gram | gram | gram | gram |
| Example 1 | 1000 | 2 | 53 | - | - | 0.73 | 374 |
| Example 2 | 1000 | 11 | 29 | - | - | 0.73 | 419 |

(continued)

| | | Polymerization formulation | | | | Initiator | Solvent |
|---|---|---|---|---|---|---|---|
| | VAM | Monomer unit containing lactam functional group | Monomer unit containing carboxyl group | | Monomer unit containing sulfonic acid group | AIBN | MeOH |
| | | NVP | 33.04 wt% 3M | 43.84 wt% CrA | 15.00 wt% AMPS | | |
| | gram | gram | gram | gram | gram | gram | gram |
| Example 3 | 1000 | 19 | 6 | - | - | 0.73 | 341 |
| Example 4 | 1000 | 20 | 53 | - | - | 0.73 | 314 |
| Example 5 | 1000 | 30 | 60 | - | - | 0.73 | 200 |
| Example 6 | 1000 | 43 | 60 | - | - | 0.73 | 141 |
| Example 7 | 1000 | 43 | 65 | - | - | 0.73 | 138 |
| Example 8 | 1000 | 36 | 53 | - | - | 0.73 | 94 |
| Example 9 | 1000 | 36 | 53 | - | - | 0.73 | 56 |
| Example 10 | 1000 | 43 | - | 24 | - | 1.46 | 24 |
| Example 11 | 1000 | 43 | - | 26 | - | 1.46 | 23 |
| Comparative Example 1 | 1000 | - | 61 | - | - | 0.73 | 401 |
| Comparative Example 2 | 1000 | - | 56 | - | - | 0.73 | 245 |
| Comparative Example 3 | 1000 | - | 56 | - | - | 0.73 | 245 |
| Comparative Example 4 | 1000 | - | 56 | - | - | 0.73 | 245 |
| Comparative Example 5 | 1000 | - | 59 | - | - | 0.73 | 243 |
| Comparative Example 6 | 1000 | 36 | - | - | - | 0.35 | 160 |
| Comparative Example 7 | 1000 | 40 | 45 | - | - | 0.73 | 60 |
| Comparative Example 8 | 1000 | - | 49 | - | - | 0.73 | 249 |
| Comparative Example 9 | 1000 | - | - | - | 544 | 2.09 | 172 |
| Comparative Example 10 | 1000 | 27 | - | - | 477 | 2.22 | 153 |
| Comparative Example 11 | 1000 | 28 | 42 | - | - | 0.68 | 104 |

33.04 wt% 3M in Table 2 refers to dissolving the 3M monomer in methanol to prepare a 3M methanol solution with a concentration of 33.04 wt%. The weight indicated in Table 2 refers to the weight of the 3M methanol solution.

In Table 2, 43.84 wt% CrA refers to dissolving the CrA monomer in methanol to prepare a CrA methanol solution with a concentration of 43.84 wt%. The weight indicated in Table 2 refers to the weight of the CrA methanol solution.

In Table 2, 15.00 wt% AMPS refers to dissolving the AMPS monomer and an equimolar amount of NaOH with the AMPS monomer in methanol to prepare a 15.00 wt% AMPS methanol solution. The weight indicated in Table 2 refers to the weight of the AMPS methanol solution.

In Table 2, MeOH refers to the methanol solvent additionally added, apart from the methanol contained in the reaction monomer solution.

Collect the aforementioned discharge, then add methanol and azeotropically heat to remove unreacted monomers, obtaining a methanol solution containing the modified vinyl ester copolymer. Add a sodium hydroxide methanol solution to the aforementioned methanol solution for saponification (the concentration of sodium hydroxide in the methanol solution and the molar ratio of sodium hydroxide to the modified vinyl ester copolymer are shown in Table 3), with the saponification temperature and saponification time also shown in Table 3. Except for Comparative Example 11, wash with the saponification cleaning solvent shown in Table 3. After saponification, the saponification mixture was filtered to obtain a slurry. The collected slurry was then washed three times using 600 grams of cleaning solvent per wash. Each washing was conducted at 35°C for 3 minutes. After washing, the slurry was subjected to centrifugal dewatering and subsequently dried in an oven at 105°C for 1.5 hours. Thus, the modified vinyl alcohol copolymers of Examples 1 to 11 and Comparative Examples 1 to 11 are obtained.

Table 3

| | Saponification conditions | | | | | |
|---|---|---|---|---|---|---|
| | Methanol solution of modified vinyl ester copolymer | Sodium hydroxide methanol solution | | temperature | Time | Saponification washing solvent |
| | concentration | concentration | Sodium hydroxide | | | |
| | wt% | wt% | mole ratio | °C | hour | |
| Example 1 | 30.0 | 3.0 | 0.0270 | 35 | 2.5 | Methanol |
| Example 2 | 30.0 | 3.0 | 0.0178 | 35 | 2.5 | Methanol |
| Example 3 | 30.0 | 3.0 | 0.0080 | 35 | 2.5 | Methanol |
| Example 4 | 30.0 | 3.0 | 0.0272 | 35 | 2.5 | Methanol |
| Example 5 | 30.0 | 3.0 | 0.0281 | 35 | 2.5 | Methanol |
| Example 6 | 30.0 | 3.0 | 0.0289 | 35 | 2.5 | Methanol |
| Example 7 | 30.0 | 3.0 | 0.0311 | 35 | 2.5 | Methanol |
| Example 8 | 30.0 | 3.0 | 0.0315 | 35 | 2.5 | Methanol |
| Example 9 | 30.0 | 3.0 | 0.0350 | 35 | 2.5 | Methanol |
| Example 10 | 30.0 | 3.0 | 0.0254 | 35 | 2.5 | Methanol |
| Example 11 | 30.0 | 3.0 | 0.0275 | 35 | 2.5 | Methanol |
| Comparative Example 1 | 30.0 | 3.0 | 0.0359 | 35 | 2.5 | Methanol/methyl acetate = 2.75/1 (weight ratio) |
| Comparative Example 2 | 30.0 | 3.0 | 0.0328 | 35 | 2.5 | Methanol/methyl acetate = 2.75/1 (weight ratio) |
| Comparative Example 3 | 30.0 | 3.0 | 0.0323 | 35 | 2.5 | Methanol/methyl acetate = 2.75/1 (weight ratio) |
| Comparative Example 4 | 30.0 | 3.0 | 0.0308 | 35 | 2.5 | Methanol/methyl acetate = 2.75/1 (weight ratio) |
| Comparative Example 5 | 30.0 | 3.0 | 0.0344 | 35 | 2.5 | Methanol/methyl acetate = 2.75/1 (weight ratio) |

(continued)

| | Saponification conditions | | | | | |
|---|---|---|---|---|---|---|
| | **Methanol solution of modified vinyl ester copolymer** | **Sodium hydroxide methanol solution** | | **temperature** | **Time** | **Saponification washing solvent** |
| | **concentration** | **concentration** | **Sodium hydroxide** | | | |
| | **wt%** | **wt%** | **mole ratio** | **°C** | **hour** | |
| **Comparative Example 6** | 30.0 | 3.0 | 0.0060 | 35 | 2.5 | Methanol |
| **Comparative Example 7** | 30.0 | 3.0 | 0.0204 | 35 | 2.5 | Methanol |
| **Comparative Example 8** | 30.0 | 3.0 | 0.0381 | 35 | 2.5 | Methanol/methyl acetate = 2.75/1 (weight ratio) |
| **Comparative Example 9** | 30.0 | 3.0 | 0.0268 | 35 | 2.5 | Methanol/methyl acetate = 2.75/1 (weight ratio) |
| **Comparative Example 10** | 30.0 | 3.0 | 0.0149 | 35 | 2.5 | Methanol |
| **Comparative Example 11** | 25.0 | 10.0 | 0.0300 | 28 | 2.5 | No washing |

**Degree of modification of lactam functional group**

The modified vinyl alcohol copolymers of Examples 1 to 11 and Comparative Examples 1 to 11 were respectively taken, and the integrated area of the lactam functional group modification and the molar degree of modification were determined by measuring the $^1$H-NMR spectrum in the range of 2.05 to 2.35 ppm under the following methods and conditions.

The $^1$H analysis was conducted by a nuclear magnetic resonance spectrometer (Bruker A VIII HD 400MHz NMR), dissolved in DMSO-d6 (Acros Organics) solvent, and measured at 25°C with 400 MHz $^1$H-NMR; based on the signal observed from PVA at 3.65 to 4.00 ppm, its integrated area was set to 1 to obtain the integrated area of the signal observed from NVP at 2.05 to 2.35 ppm; based on the integrated area of the signal observed from NVP at 2.05 to 2.35 ppm, the degree of modification of the lactam functional group (i.e., the mole percentage of monomer units containing lactam functional groups among all monomer units in the modified vinyl alcohol copolymer) was determined, as shown in Table 4.

Specifically, the degree of modification of the lactam functional group is calculated by the following formula.

Degree of modification of lactam functional group = $(C/2)/[A+B+(C/2)] \times 100$ mole%

wherein A is the integrated area from 3.65 to 4.00 ppm, originating from the methine connected to the hydroxyl group in the polyvinyl alcohol monomer;
B is the integrated area from 4.70 to 5.20 ppm, originating from the methine connected to the acetoxy group in the polyvinyl alcohol monomer;
C is the integrated area from 2.05 to 2.35 ppm, derived from the lactam functional group.

**Degree of modification of carboxyl group**

10 grams of the modified vinyl alcohol copolymer from Examples 1 to 11 and Comparative Examples 1 to 11 were weighed separately, and 150 milliliters of methanol were used to extract 100 times with a Soxhlet extractor. The modified vinyl alcohol copolymers from Examples 1 to 11 and Comparative Examples 1 to 11 were purified, followed by ash content measurement according to JIS K 6726 (1994). The degree of modification of the carboxyl group was calculated from the ash content (i.e., the mole percentage of monomer units containing carboxyl groups among all monomer units in the modified vinyl alcohol copolymer). The analysis results of the degree of modification of the carboxyl group are shown in Table 4.

**Degree of modification of sulfonic acid group**

10 grams of the modified vinyl alcohol copolymer from Examples 1 to 11 and Comparative Examples 1 to 11 were weighed separately, and 150 milliliters of methanol were used to extract 100 times with a Soxhlet extractor to purify the modified vinyl alcohol copolymer. Subsequently, the total sulfur content was analyzed using a sulfur-chlorine analyzer (model: Dohrmann MCTS-130-120) to calculate the degree of modification of the sulfonic acid group (i.e., the mole percentage of monomer units containing sulfonic acid groups among all monomer units in the modified vinyl alcohol copolymer). The analysis results of the degree of modification of the sulfonic acid group are shown in Table 4.

**Viscosity, degree of saponification, and average degree of polymerization**

The modified vinyl alcohol copolymers of Examples 1 to 11 and Comparative Examples 1 to 11 were taken, and their viscosity, degree of saponification, and average degree of polymerization were measured according to the standard of JIS K 6726(1994). The analysis results of viscosity, degree of saponification, and average degree of polymerization are shown in Table 4 below.

**Melting slope**

The modified vinyl alcohol copolymers of Examples 1 to 11 and Comparative Examples 1 to 11 were subjected to thermal analysis using a differential scanning calorimeter under the following conditions:

1.Take 7 mg of the modified vinyl alcohol copolymer and perform thermal analysis using a differential scanning calorimeter (TA DSC 25) under a nitrogen atmosphere with the following heating program: 0°C (equilibrium) → (first heating, heating rate of 10°C/min) → 240°C → (cooling rate of 10°C/min) → 0°C → (second heating, heating rate of 10°C/min) → 250°C.

2.Plotting the temperature in the second heating procedure on the X-axis and the heat flow on the Y-axis yields a second heating curve. Select the line segment between 100°C and the melting point Tm(°C), and use Excel to draw a linear trendline. The slope value of this trendline is taken as the melting slope. The analysis results of the melting slope are shown in Table 4 below.

**Preparation of resin film**

The modified vinyl alcohol copolymers prepared in Examples 1 to 11 and Comparative Examples 1 to 11 were each formulated into a 15.0% by weight aqueous solution of the modified vinyl alcohol copolymer, cast onto a polyester film, and dried at room temperature. After peeling from the polyester film, an initial product film with a thickness of 50 $\mu$m was obtained. The resulting initial product film was subjected to heat treatment at 105°C for 30 minutes to obtain a resin film.

**Film adhesion**

The resin films obtained from the modified vinyl alcohol copolymers of Examples 1 to 11 and Comparative Examples 1 to 11 were cut into squares of 3 cm×3 cm and stored at room temperature for 2 hours. Two stored films were then placed in contact with each other, and the adhesion state of the contact surfaces was evaluated.

The evaluation criteria for the aforementioned stickiness state are as follows.

A: The contact surfaces of the two films do not stick to each other.

B: The contact surface portion of the two films adheres to each other, and the two films can be separated with slight force.

C: The contact surfaces of the two films are sticky to each other and cannot be separated.

**Water solubility of the resin film**

The resin films made from the modified vinyl alcohol copolymer of Examples 1 to 11 and Comparative Examples 1 to 11 were cut into 3 cm × 3 cm squares and clamped in a slide clip. A 1-liter glass beaker containing 1 liter of distilled water was set in a constant temperature bath at 10°C, and stirring was performed using a 4.5 cm rotor at 400 rpm. After confirming that the distilled water in the glass beaker had reached a temperature of 10°C, the resin film clamped in the slide clip was immersed in the stirring cold water in the glass beaker to begin measuring water solubility. At this time, the dissolution state of the film was observed, and the time for film rupture (i.e., when the film begins to rupture) and complete film dissolution was measured. A resin film with a film rupture time at 10°C greater than 35 seconds was considered poor, and a film dissolution time at 10°C greater than 40 seconds was considered poor. The test results are shown in Table 4 below.

**Tensile force of the resin film**

The resin films from Examples 1, 3, 8, and 9 and Comparative Examples 1, 4 to 8, and 10 were cut into strip films with a width of 6 mm. These resin films were clamped by two grips of a tensile testing machine (AI-7000M) to conduct a tensile test. The interval between the two grips was 50 mm. During the tensile test, the resin film was stretched at a speed of 200 mm/min to twice its original length (i.e., stretched until the interval between the two grips was 100 mm). The tensile force of the resin film when stretched to twice its original length was recorded in units of kgf/cm$^2$. A tensile force of the resin film below 250 kgf/cm$^2$ was considered poor. The test results are shown in Table 5 below.

**Alkali resistance**

Prepare a 6.0% by weight sodium hydroxide aqueous solution. Place 100 milliliters of the 6.0% by weight sodium hydroxide aqueous solution in a 250-milliliter glass beaker, maintain at a constant temperature of 80°C, and use a 4.5 cm rotor to stir at 200 rpm. Add 1 gram each of the modified vinyl alcohol copolymers from Examples 1, 3, 6 to 9 and Comparative Examples 1, 4 to 10, and measure the time until complete dissolution under stirring. A dissolution time exceeding 1000 seconds is considered poor. The test results are shown in Table 6 below.

Table 4

| | Pyrrolidone monomer | | Carboxylic acid monomer | | Sulfonic acid monomer | Total degree of modification (mole%) | Degree of saponification (mole%) | Viscosity (cps) | Average degree of polymerization | Melting slope (W/g °C) | film adhesion | water solubility | |
|---|---|---|---|---|---|---|---|---|---|---|---|---|---|
| | Integrated area (2.05 to 2.35 ppm) | NVP (mole %) | 3M (mole %) | CrA (mole %) | AMPS (mole %) | | | | | | | 10°C film rupture Time (sec) | 10°C film dissolution Time (sec) |
| Example 1 | 0.004 | 0.18 | 1.73 | - | - | 1.91 | 88.18 | 20.60 | 1700 | -0.001770 | A | 27.16 | 39.55 |
| Example 2 | 0.022 | 0.96 | 0.96 | - | - | 1.92 | 87.91 | 16.70 | 1600 | -0.001647 | A | 24.76 | 34.84 |
| Example 3 | 0.039 | 1.67 | 0.25 | - | - | 1.92 | 88.08 | 13.00 | 1400 | -0.001846 | A | 26.17 | 34.91 |
| Example 4 | 0.037 | 1.60 | 1.77 | - | - | 3.37 | 87.66 | 19.10 | 1600 | -0.001647 | A | 17.54 | 27.25 |
| Example 5 | 0.060 | 2.56 | 1.88 | - | - | 4.44 | 87.98 | 21.74 | 1700 | -0.001616 | A | 17.75 | 25.83 |
| Example 6 | 0.083 | 3.49 | 1.94 | - | - | 5.43 | 87.01 | 22.60 | 1700 | -0.001526 | A | 15.91 | 23.81 |
| Example 7 | 0.080 | 3.38 | 2.15 | - | - | 5.53 | 87.10 | 20.98 | 1700 | -0.001536 | A | 15.35 | 22.62 |
| Example 8 | 0.084 | 3.49 | 2.34 | - | - | 5.83 | 85.68 | 29.00 | 2000 | -0.001095 | B | 18.13 | 25.30 |
| Example 9 | 0.080 | 3.52 | 2.28 | - | - | 5.80 | 91.46 | 30.80 | 2000 | -0.001736 | A | 31.21 | 37.26 |
| Example 10 | 0.079 | 3.38 | - | 1.90 | - | 5.28 | 88.65 | 13.10 | 1400 | -0.001609 | A | 17.20 | 26.18 |
| Example 11 | 0.082 | 3.59 | - | 2.06 | - | 5.65 | 90.84 | 14.20 | 1400 | -0.001703 | A | 20.14 | 28.05 |
| Comparative Example 1 | - | - | 1.89 | - | - | 1.89 | 87.65 | 19.40 | 1600 | -0.002679 | A | 35.79 | 47.56 |

| | Pyrrolidone monomer | | Carboxylic acid monomer | | Sulfo nic acid mono mer | Total degree of modific ation (mole%) | Degree of saponific ation (mole%) | Visco sity (cps) | Average degree of polymeri zation | Melting slope (W/g °C) | film adhes ion | water solubility | |
|---|---|---|---|---|---|---|---|---|---|---|---|---|---|
| | Integr ated area (2.05 to 2.35 ppm) | NVP (mole %) | 3M (mole %) | CrA (mole %) | AMP S (mole %) | | | | | | | 10°C film rupt ure Tim e (sec) | 10°C film dissolu tion Time (sec) |
| Compar ative Ex- ampl e 2 | - | - | 1.71 | - | - | 1.71 | 89.15 | 32.40 | 2000 | -0.002000 | A | 31.7 9 | 45.78 |
| Compar ative Exampl e 3 | - | - | 1.71 | - | - | 1.71 | 90.72 | 34.10 | 2000 | -0.002144 | A | 38.0 0 | 57.10 |
| Compar ative Exampl e 4 | - | - | 2.23 | - | - | 2.23 | 85.65 | 31.30 | 2000 | -0.002232 | A | 43.9 1 | 55.40 |
| Compar ative Exampl e 5 | - | - | 2.23 | - | - | 2.23 | 89.92 | 31.60 | 2000 | -0.001936 | A | 60.8 2 | 80.53 |
| Compar ative Exampl e 6 | 0.079 | 3.35 | - | - | - | 3.35 | 87.98 | 25.20 | 1700 | -0.001579 | A | 26.2 5 | 38.21 |
| Compar ative Exampl e 7 | 0.104 | 3.34 | 1.71 | - | - | 5.05 | 66.54 | 26.40 | 2000 | -0.000561 | C | 15.8 9 | 27.01 |
| Compar ative Exampl e 8 | - | - | 1.88 | - | - | 1.88 | 93.15 | 34.90 | 2000 | -0.002274 | A | 76.8 6 | 102.74 |
| Compar ative Exampl e 9 | - | - | - | - | 4.44 | 4.44 | 90.66 | 11.30 | 1400 | -0.002042 | A | 42.4 7 | 63.49 |
| Compar ative Exampl e 10 | 0.068 | 2.84 | - | - | 4.01 | 6.85 | 86.55 | 12.00 | 1400 | -0.001545 | A | 15.2 4 | 26.11 |

(continued)

| | Pyrrolidone monomer | | Carboxylic acid monomer | | Sulfonic acid monomer | Total degree of modification (mole%) | Degree of saponification (mole%) | Viscosity (cps) | Average degree of polymerization | Melting slope (W/g °C) | film adhesion | water solubility | |
|---|---|---|---|---|---|---|---|---|---|---|---|---|---|
| | Integrated area (2.05 to 2.35 ppm) | NVP (mole%) | 3M (mole%) | CrA (mole%) | AMPS (mole%) | | | | | | | 10°C film rupture Time (sec) | 10°C film dissolution Time (sec) |
| Comparative Example 11 | 0.052 | 2.19 | 1.76 | - | - | 3.95 | 85.69 | 29.60 | 2000 | -0.002332 | A | 26.6 0 | 48.20 |

As shown in Table 4, the integrated area of 2.05 to 2.35 ppm for Examples 1 to 11 is between 0.002 and 0.200, the degree of modification of the lactam functional group is between 0.1 and 8.0 mole%, the melting slope is between -0.00100 and -0.00190 W/g°C, the degree of modification of the carboxyl group (i.e., the mole percentage of monomer units containing carboxyl groups among all monomer units of the modified vinyl alcohol copolymer) is between 0.1 and 4.0 mole%, and the total degree of modification is between 1.5 and 10.0 mole%. All of these have good low-temperature dissolution properties, with film rupture at 10°C being less than 35 seconds and film dissolution at 10°C being less than 40 seconds, and there is no issue of film adhesion causing stickiness. Additionally, it is noteworthy that the melting slope of Examples 1 to 7 and 9 to 11 is between -0.00120 and -0.00190 W/g°C, and their film adhesion performance is even more excellent.

In comparison, Comparative Examples 1 to 5, 8, and 9 do not contain lactam functional groups, and their water solubility does not meet the standard of film rupture time at 10°C being less than 35 seconds and film dissolution time being less than 40 seconds, resulting in poor low-temperature solubility. Although the water solubility of Comparative Example 7 meets the standard of film rupture time at 10°C being less than 35 seconds (sec) and film dissolution time being less than 40 seconds (sec), the melting slope of Comparative Example 7 is greater than -0.00100 W/g°C, showing significant film adhesion. Comparative Example 11 contains carboxyl groups and lactam functional groups, but its melting slope is less than -0.00190 W/g°C, resulting in poor water solubility.

Table 5

| | Pyrrolidone monomer | | Carboxylic acid monomer | | Sulfonic acid monomer | Total degree of modification (mole%) | Degree of saponification (mole%) | Viscosity (cps) | Average degree of polymerization | Melting slope (W/g °C) | Alkali resistance (Dissolution time in alkali solution) (sec) |
|---|---|---|---|---|---|---|---|---|---|---|---|
| | Integrated area (2.05 to 2.35 ppm) | NVP (mole %) | 3M (mole %) | CrA (mole %) | AMPS (mole %) | | | | | | |
| Example 1 | J.004 | 0.18 | 1.73 | - | - | 1.91 | 88.18 | 20.60 | 1700 | -0.001770 | 600 |
| Example 3 | 0.039 | 1.67 | 0.25 | - | - | 1.92 | 88.08 | 13.00 | 1400 | -0.001846 | 600 |
| Example 6 | 0.083 | 3.49 | 1.94 | - | - | 5.43 | 87.01 | 22.60 | 1700 | -0.001526 | 456 |
| Example 7 | 0.080 | 3.38 | 2.15 | - | - | 5.53 | 87.10 | 20.98 | 1700 | -0.001536 | 512 |
| Example 8 | 0.084 | 3.49 | 2.34 | - | - | 5.83 | 85.68 | 29.00 | 2000 | -0.001095 | 531 |
| Example 9 | 0.080 | 3.52 | 2.28 | - | - | 5.80 | 91.46 | 30.80 | 2000 | -0.001736 | 972 |
| Comparative Example 1 | - | - | 1.89 | - | - | 1.89 | 87.65 | 19.40 | 1600 | -0.002679 | 540 |
| Comparative Example 4 | - | - | 2.23 | - | - | 2.23 | 85.65 | 31.30 | 2000 | -0.002232 | 1800 |
| Comparative Example 5 | - | - | 2.23 | - | - | 2.23 | 89.92 | 31.60 | 2000 | -0.001936 | 1612 |
| Comparative Example 6 | 0.079 | 3.35 | - | - | - | 3.35 | 87.98 | 25.20 | 1700 | -0.001579 | Insoluble |
| Comparative Example 7 | 0.104 | 3.34 | 1.71 | - | - | 5.05 | 66.54 | 26.40 | 2000 | -0.000561 | 900 |
| Comparative Example 8 | - | - | 1.88 | - | - | 1.88 | 93.15 | 34.90 | 2000 | -0.002274 | Unable to dissolve |
| Comparative Example 9 | - | - | - | - | 4.44 | 4.44 | 90.66 | 11.30 | 1400 | -0.002042 | Insoluble |
| Comparative Example 10 | 0.068 | 2.84 | - | - | 4.01 | 6.85 | 86.55 | 12.00 | 1400 | -0.001545 | Insoluble |

EP 4 782 471 A1

The time required for dissolution in alkali solution for Examples 1, 3, and 6 to 9 is less than 1000 seconds (sec). Therefore, the modified vinyl alcohol copolymer of the present disclosure is not easily reduced in water solubility due to an increase in the degree of saponification in an alkaline environment, thus exhibiting better alkali resistance. Although Comparative Example 6 meets the standard of film rupture time being less than 35 seconds (sec) and film dissolution time being less than 40 seconds (sec) at 10°C, it does not contain carboxyl groups and performs poorly in alkali resistance. Similarly, although Comparative Example 10 also meets the standard of film rupture time being less than 35 seconds (sec) and film dissolution time being less than 40 seconds (sec) at 10°C, it substitutes sulfonic acid groups for carboxyl groups and performs poorly in alkali resistance tests.

Table 6

| | Pyrrolidone monomer | | Carboxylic acid monomer | | sulfonic acid monomer | Total degree of modification (mole%) | Degree of saponification (mole%) | Viscosity (cps) | Average degree of polymerization | Melting slope (W/g °C) | Tensile force (kgf/cm$^2$) |
|---|---|---|---|---|---|---|---|---|---|---|---|
| | Integrated area (2.05 to 2.35 ppm) | NVP (mole%) | 3M (mole%) | CrA (mole%) | AMPS (mole%) | | | | | | |
| Example 1 | 0.004 | 0.18 | 1.73 | - | - | 1.91 | 88.18 | 20.60 | 1700 | -0.001770 | 318.0 |
| Example 3 | 0.039 | 1.67 | 0.25 | - | - | 1.92 | 88.08 | 13.00 | 1400 | -0.001846 | 272.3 |
| Example 8 | 0.084 | 3.49 | 2.34 | - | - | 5.83 | 85.68 | 29.00 | 2000 | -0.001095 | 397.8 |
| Example 9 | 0.080 | 3.52 | 2.28 | - | - | 5.80 | 91.46 | 30.80 | 2000 | -0.001736 | 461.0 |
| Comparative Example 1 | - | - | 1.89 | - | - | 1.89 | 87.65 | 19.40 | 1600 | -0.002679 | 327.6 |
| Comparative Example 4 | - | - | 2.23 | - | - | 2.23 | 85.65 | 31.30 | 2000 | -0.002232 | 414.6 |
| Comparative Example 5 | - | - | 2.23 | - | - | 2.23 | 89.92 | 31.60 | 2000 | -0.001936 | 543.0 |
| Comparative Example 6 | 0.079 | 3.35 | - | - | - | 3.35 | 87.98 | 25.20 | 1700 | -0.001579 | 159.1 |
| Comparative Example 7 | 0.104 | 3.34 | 1.71 | - | - | 5.05 | 66.54 | 26.40 | 2000 | -0.000561 | 42.4 |
| Comparative Example 8 | - | - | 1.88 | - | - | 1.88 | 93.15 | 34.90 | 2000 | -0.002274 | 835.5 |
| Comparative Example 10 | 0.068 | 2.84 | - | - | 4.01 | 6.85 | 86.55 | 12.00 | 1400 | -0.001545 | 240.1 |

The tensile force of Examples 1, 3, 8, and 9 is greater than 250 kgf/cm$^2$, exhibiting better tensile properties. Comparative Examples 6 and 10 do not contain carboxyl groups, with tensile force values of only 159.1 kgf/cm$^2$ and 240.1 kgf/cm$^2$, respectively, showing poor performance. Comparative Example 7 has a degree of saponification less than 70 mol% with sulfonic acid groups replacing carboxyl groups, and its tensile force value is only 42.4 kgf/cm$^2$, showing poor performance. Comparative Examples 1 to 10 have at least one technical feature that does not conform to the above, resulting in at least one characteristic such as low-temperature solubility, high mechanical strength, or alkali resistance not being comparable to Examples 1 to 11.

In summary, the modified vinyl alcohol copolymer, with a degree of saponification of 70 mole% or more according to JIS K 6726(1994) standard, comprises monomer units containing carboxyl groups and monomer units containing lactam functional groups. The $^1$H-NMR spectrum of the modified vinyl alcohol copolymer is measured at 400 MHz and 25°C using DMSO-d6 as a solvent. An integrated area of the spectrum from 3.65 to 4.00 ppm is defined as 1, and an integrated area of the spectrum corresponding to 2.05 to 2.35 ppm is in a range of 0.002 to 0.200. The differential scanning calorimeter is used for thermal analysis of the modified vinyl alcohol copolymer, and a curve plotted with temperature as an X-axis and heat flow as a Y-axis has a slope between -0.00100 and -0.00190 W/g°C from 100°C to the melting point Tm(°C). These technical features enable it to simultaneously possess low film adhesion, low-temperature solubility, high mechanical strength, and alkali resistance.

In addition, the resin film of the present disclosure, by comprising the modified vinyl alcohol copolymer of the present disclosure, simultaneously possesses characteristics such as low film adhesion, low-temperature solubility, high mechanical strength, and alkali resistance.

In addition, the water-soluble package of the present disclosure, by comprising the resin film of the present disclosure, allows its contents to be released at lower water temperatures to meet the goals of carbon reduction and net-zero emissions.

The present disclosure has been disclosed in the above with preferred embodiments, but it should be understood by those skilled in the art that these embodiments are merely for illustrating the present disclosure and should not be construed as limiting the scope of the present disclosure. It should be noted that any variations and substitutions equivalent to these embodiments should be considered within the scope of the present disclosure. Therefore, the scope of protection of the present disclosure should be defined by the appended claims.

**Claims**

1. A modified vinyl alcohol copolymer, having a degree of saponification of 70 mole% or more according to JIS K 6726 (1994) standard; wherein the modified vinyl alcohol copolymer comprises monomer units containing carboxyl groups and monomer units containing lactam functional groups;

   wherein a $^1$H-NMR spectrum of the modified vinyl alcohol copolymer is measured at 400 MHz and 25°C using DMSO-d6 as a solvent, an integrated area of the spectrum from 3.65 to 4.00 ppm is defined as 1, and an integrated area of the spectrum corresponding to 2.05 to 2.35 ppm is in a range of 0.002 to 0.200;
   wherein the modified vinyl alcohol copolymer is subjected to thermal analysis using a differential scanning calorimeter, and in a curve obtained by plotting temperature as an X-axis and heat flow as a Y-axis, a slope between 100°C and a melting point Tm(°C) is in a range of -0.00100 and -0.00190 W/g°C.

2. The modified vinyl alcohol copolymer of claim 1, wherein the degree of saponification is 70 to 99 mole%.

3. The modified vinyl alcohol copolymer of claim 1, wherein the degree of saponification is 80 mole% or more.

4. The modified vinyl alcohol copolymer of claim 3, wherein the degree of saponification is 80 to 95 mole%.

5. The modified vinyl alcohol copolymer of claim 1, wherein among all monomer units of the modified vinyl alcohol copolymer, the monomer units containing carboxyl groups account for 0.1 mole% to 4.0 mole%.

6. The modified vinyl alcohol copolymer of claim 5, wherein among all monomer units of the modified vinyl alcohol copolymer, the monomer units containing carboxyl groups account for 0.1 mole% to 3.0 mole%.

7. The modified vinyl alcohol copolymer of claim 1, wherein the integrated area of the spectrum from 2.05 to 2.35 ppm is 0.003 to 0.100.

8. The modified vinyl alcohol copolymer of claim 1, wherein the slope between 100°C and the melting point Tm(°C) is in a range of -0.00120 and -0.00190 W/g°C.

9. The modified vinyl alcohol copolymer of claim 1, having a viscosity of 10 to 35 cps according to the JIS K 6726(1994) standard.

10. The modified vinyl alcohol copolymer of claim 1, having an average degree of polymerization of 1400 to 2000 according to the JIS K 6726(1994) standard.

11. The modified vinyl alcohol copolymer of claim 1, wherein the lactam functional group is selected from at least one of caprolactam, butyrolactam, pyrrolidone, methylpyrrolidone, piperidone, or morpholinone.

12. The modified vinyl alcohol copolymer of claim 11, wherein the lactam functional group is derived from at least one of N-vinyl-2-caprolactam, N-vinylbutyrolactam, N-vinylpyrrolidone, N-vinyl-5-methyl-2-pyrrolidone, N-vinyl-2-piperidone, or N-vinyl-3-morpholinone.

13. The modified vinyl alcohol copolymer of claim 12, wherein the lactam functional group is derived from at least one of N-vinylbutyrolactam, N-vinylpyrrolidone, or N-vinyl-5-methyl-2-pyrrolidone.

14. The modified vinyl alcohol copolymer of claim 1, wherein the carboxyl group is derived from at least one of maleic acid, monomethyl maleate, monoethyl maleate, maleic anhydride, itaconic acid, monomethyl itaconate, monoethyl itaconate, crotonic acid, or acrylic acid.

15. A resin film, comprising the modified vinyl alcohol copolymer according to claim 1.

16. A water-soluble package, comprising the resin film of claim 15.

EUROPEAN SEARCH REPORT

Application Number

EP 26 15 3579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/162365 A1 (KURARAY CO [JP]) 8 August 2024 (2024-08-08) * paragraph [0007] * * page 1 * | 1-16 | INV. C08F216/06 C08F8/12 C08F218/08 C08J5/18 |
| A | US 2023/227595 A1 (SAWA KAZUHIRO [US] ET AL) 20 July 2023 (2023-07-20) * paragraphs [0002], [0005] * * tables 1A, 1B * | 1-16 | |
| A | US 2017/247154 A1 (IEDA YASUYUKI [JP] ET AL) 31 August 2017 (2017-08-31) * paragraphs [0013], [0021], [0022] * * page 1; examples 4,5,8,11,9,10; table 1 * * table 2 * | 1-16 | |
| A | US 2022/356314 A1 (KNIGHT JONATHON [US]) 10 November 2022 (2022-11-10) * paragraph [0011] * * example 2 * | 1-16 | TECHNICAL FIELDS SEARCHED (IPC) C08J C08F |

The present search report has been drawn up for all claims

| Place of search | Date of completion of the search | Examiner |
|---|---|---|
| The Hague | 17 June 2026 | Plehiers, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 26 15 3579

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2026

| Patent document cited in search report | Publication date | Patent family member(s) | Publication date |
|---|---|---|---|
| WO 2024162365 A1 | 08-08-2024 | CN 120641448 A | 12-09-2025 |
| | | DE 112024000388 T5 | 20-11-2025 |
| | | JP WO2024162365 A1 | 08-08-2024 |
| | | WO 2024162365 A1 | 08-08-2024 |
| US 2023227595 A1 | 20-07-2023 | EP 4463491 A1 | 20-11-2024 |
| | | JP 2025502968 A | 30-01-2025 |
| | | US 2023227595 A1 | 20-07-2023 |
| | | WO 2023137185 A1 | 20-07-2023 |
| US 2017247154 A1 | 31-08-2017 | CN 105916780 A | 31-08-2016 |
| | | EP 3190063 A1 | 12-07-2017 |
| | | ES 2886644 T3 | 20-12-2021 |
| | | JP WO2016035671 A1 | 27-04-2017 |
| | | TW 201613806 A | 16-04-2016 |
| | | US 2017247154 A1 | 31-08-2017 |
| | | WO 2016035671 A1 | 10-03-2016 |
| US 2022356314 A1 | 10-11-2022 | AU 2020360405 A1 | 07-04-2022 |
| | | BR 112022005817 A2 | 21-06-2022 |
| | | CA 3151332 A1 | 08-04-2021 |
| | | CA 3209793 A1 | 08-04-2021 |
| | | CN 114829464 A | 29-07-2022 |
| | | EP 4017905 A1 | 29-06-2022 |
| | | JP 7488889 B2 | 22-05-2024 |
| | | JP 2022549789 A | 29-11-2022 |
| | | JP 2024028737 A | 05-03-2024 |
| | | KR 20220073801 A | 03-06-2022 |
| | | US 2022356314 A1 | 10-11-2022 |
| | | WO 2021067482 A1 | 08-04-2021 |

EPO FORM P0459

For more details about this annex : see Official Journal of the European Patent Office, No. 12/82

**EP 4 782 471 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TW 201934644
- CN 107922646 A